# EUROPÄISCHE PATENTSCHRIFT

(11) **EP 1 697 819 B1**
(45) Veröffentlichungstag und Bekanntmachung des Hinweises auf die Patenterteilung: **11.08.2010**
(21) Anmeldenummer: 04816258.0
(22) Anmeldetag: 15.12.2004
(51) Int. Cl.: G06F 21/00

(54) **VERFAHREN ZUM SCHÜTZEN EINER PROPRIETÄREN DATEI**
METHOD FOR PROTECTING A PROPRIETARY FILE
PROCEDE DE PROTECTION D'UN FICHIER PROPRIETAIRE

(30) Priorität: 23.12.2003 DE 10360921
(43) Veröffentlichungstag der Anmeldung: 06.09.2006
(73) Patentinhaber: arvato digital services GmbH, 33311 Gütersloh (DE)
(72) Erfinder: DZEKO, Mario, 33604 Bielefeld (DE); MAUKISCH, Jens, 32120 Hiddenhausen (DE); UHL, Sebastian, 32051 Herford (DE)
(74) Vertreter: Prietsch, Reiner
(86) Internationale Anmeldenummer: PCT/DE2004/002743
(87) Internationale Veröffentlichungsnummer: WO 2005/062152

(56) Entgegenhaltungen:
- US-A1- 2002 049 760
- US-A1- 2003 061 287
- US-A1- 2003 233 455
- SCHECHTER E S ET AL: "Trusted Computing, Peer-To-Peer Distribution, and the Economics of Pirated Entertainment" 29. Mai 2003 (2003-05-29), ANNUAL WORKSHOP ON ECONOMICS AND INFORMATION SECURITY , XP002299690 Kapitel 3.2
- SORKIN A R: "Software Bullet Is Sought to Kill Musical Piracy" NEW YORK TIMES, NEW YORK,NY, US, 4. Mai 2003 (2003-05-04), Seiten 1-3, XP002299692
- "Overpeer spreads fake files though P2P networks"[Online] 9. Juli 2002 (2002-07-09), XP002327498 Gefunden im Internet: URL:http://web.archive.org/web/20020709113 823/http://www.afterdawn.com/news/archive/ 3101.cfm> [gefunden am 2005-05-09]
- SAAF R: "WRITTEN TESTIMONY FOR THE OVERSIGHT HEARING ON Piracy of Intellectual Property on Peer-to-Peer Networks" 26. September 2002 (2002-09-26), , XP002299691 das ganze Dokument

## Beschreibung

Die Erfindung betrifft ein Verfahren zum Schützen einer Datei mit proprietärem Inhalt gegen unerlaubte Vervielfältigung durch Filesharing von fremden Rechnern, die zu einer Internet-Tauschbörse zusammengeschlossen sind und welche die Datei in Form von gestreut gespeicherten Datensätzen zur Verfügung stellen, von denen jeder einen Teil des proprietären Inhalts und Metadaten umfasst, die unter anderem aus mindestens einer Hash-ID und z.B. dem Titel bestehen.

Den Inhabern der Rechte insbesondere an Musik- und Filmwerken sowie Spielen entstehen durch die unerlaubte Vervielfältigung der elektronischen Versionen dieser Werke beträchtliche wirtschaftliche Schäden. Ein großer Teil der unerlaubten Vervielfältigungen erfolgt über Internet-Tauschbörsen, die nach dem Peer-to-Peer-Verfahren (P2P) arbeiten. Am verbreitetsten sind zentrale P2P-Tauschbörsen, bei denen auf (zentralen) Servern Verzeichnisse der zum Tausch verfügbaren Inhalte und die IP-Adressen der an der Tauschbörsen teilnehmenden Rechner, von denen diese Inhalte herunterladbar sind, gespeichert sind. Auf eine Suchanfrage erhält ein Teilnehmerrechner von dem/den antwortenden Server(n) ein Verzeichnis mit den IP-Adressen derjenigen anderen Teilnehmerrechner, welche eine Datei mit dem gesuchten Inhalt gespeichert haben und zum Tausch anbieten. Der suchende Rechner baut dann Verbindungen zu den anbietenden Rechnern auf und lädt die Datei mit dem gesuchten Inhalt unmittelbar von den anbietenden Rechnern herunter. Bei dezentralen P2P-Tauschbörsen übernehmen die Teilnehmerrechner bei Suchanfragen auch die Rolle des Servers für den suchenden Rechner und antworten entweder, dass die Datei mit dem gesuchten Inhalt zum Herunterladen bereitsteht oder, falls nicht, leiten die Suchanfrage an andere Teilnehmerrechner weiter, die nötigenfalls wiederum weiterleiten, bis die Datei mit dem gesuchten Inhalt gefunden ist und der suchende Rechner sie von dem betreffenden Teilnehmerrechner herunterladen kann.

In der Regel sind die zum Tausch angebotenen Dateien auf mehreren Teilnehmerrechnern gespeichert, und zwar in Form von einzelnen Datensätzen, von denen jeder einen Teil des Inhalts und Metadaten umfasst, zu denen mindestens eine nach dem bekannten Hash-Verfahren generierte Hash-ID gehört. Der suchende Teilnehmerrechner lädt dann von den die gesuchte Datei anbietenden, eine Gruppe bildenden Teilnehmerrechnern die entsprechenden, gestreut gespeicherten Datensätze herunter und fügt sie wieder zu einer Datei mit dem gesuchten Inhalt zusammen.

Es ist bekannt, dass zumindest einzelne Rechteinhaber versuchen, diese Art der unerlaubten Vervielfältigung ihrer originalen Dateien mit proprietären Inhalten dadurch zu erschweren, dass sie sich an den einschlägigen Tauschbörsen als Anbieter beteiligen, und zwar mit Dateien, die scheinbar den gesuchten, proprietären Inhalt haben, tatsächlich aber lediglich Rauschen, Teile des Titels oder ähnliches enthalten. Obwohl sich diese unbrauchbaren Dateien, weil anhand ihrer Metadaten nicht als solche erkennbar, in gleicher Weise wie die originalen Dateien auf den bei der betreffenden Tauschbörse angemeldeten Teilnehmerrechnern verbreiten und in den Verzeichnissen der Tauschbörsenserver eingetragen sind, lässt sich mit diesem sog. flooding-Verfahren nur die für die unerlaubte Vervielfältigung der originalen Datei benötigte Zeit verlängern, denn der Nutzer. des suchenden Rechners, der nach dem Herunterladen einer mindestens einen unbrauchbaren Datensatz umfassenden Datei diese als insgesamt unbrauchbar erkennt, wird eine neue Suche starten und früher oder später die gesuchte originale Datei von anderen Tauschbörsenrechnern erhalten.

Der Erfindung liegt die Aufgabe zugrunde, ein Verfahren der einleitend angegebenen Gattung zu schaffen, das einen verbesserten Schutz von Dateien gegen unerlaubte Vervielfältigung nach einem P2P-Verfahren bietet.

Diese Aufgabe ist bei einem gattungsgemäßen Verfahren erfindungsgemäß durch die folgenden Schritte gelöst:
- 1.1: Suchen nach dem zu schützenden Inhalt im Internet
- 1.2: Abspeichern mindestens der Hash-ID jedes als Treffer von mindestens einem fremden Rechner angebotenen Da- tensatzes
- 1.3: Erzeugen eines gegenüber dem angebotenen Datensatz veränderten Datensatzes, der mindestens dieabgespei- cherte Hash-ID und mit dieser verknüpfte Ersatzin- haltsdaten umfasst
- 1.4: Beantworten von Anfragen fremder Rechner nach der zu schützenden Datei durch Anbieten des veränderten Da- tensatzes.

Die vorstehend genannten, fremden Rechner können sowohl Tauschbörsenserver als auch insbesondere im Fall des dezentralen P2P-Verfahrens an der betreffenden Internet-Tauschbörse teilnehmende Rechner sein. Dementsprechend kann das im vorstehenden Schritt 1.4 genannte Anbieten des veränderten Datensatzes sich auf die Information beschränken, dass die angefragte Datei oder ein Teil derselben von dem eigenen Rechner zum Herunterladen bereit gehalten wird, oder das Anbieten kann die Freigabe des Herunterladens des veränderten Datensatzes umfassen.

Wenn der Nutzer des fremden Rechners das Herunterladen der von ihm gesuchten und angeforderten Datei visuell oder akustisch verfolgt, wird er feststellen, dass er statt der gesuchten Datei eine unbrauchbare Datei erhält und deshalb den Vorgang wiederholen oder eine neue Suche starten. Wenn der Nutzer des Rechners das Herunterladen nicht verfolgt, wird an seiner Stelle das Tauschbörsenprogramm seines Rechners spätestens bei Beendigung des Herunterladens erkennen, dass die heruntergeladene Datei mindestens einen gegenüber dem originalen Datensatz veränderten Datensatz umfasst und deshalb die Datei, zumindest aber den betreffenden Datensatz, erneut herunterladen oder nach einem anderen (Tauschbörsen-) Rechner suchen, der zumindest den betreffenden Datensatz anbietet. Weil der veränderte Datensatz, ohne als solcher im Vorhinein erkennbar zu sein, von vielen weiteren, an der Tauschbörse teilnehmenden Rechnern unter der vermeintlich richtigen Hash-ID bereitgehalten wird, besteht eine hohe Wahrscheinlichkeit, dass der suchende und anfordernde Rechner neuerlich den veränderten Datensatz herunterlädt, diesen als verändert erkennt, erneut herunterlädt oder sucht, usw.. Nach einer gewissen Zeit wird der Nutzer dieses Rechners die Suche nach der originalen Datei abbrechen.

Im Unterschied zu dem bekannten flooding-Verfahren, dessen Effektivität zumindest bei bestimmten Tauschbörsenprogrammen dadurch eingeschränkt ist, dass der Nutzer des fremden Rechners bei der weiteren Suche die IP-Adressen von Rechnern, von denen sein Rechner mindestens einen unbrauchbaren Datensatz heruntergeladen hat, unterdrücken kann, versucht bei dem Verfahren nach der Erfindung der fremde Rechner ständig aufs Neue, die originale Datei herunterzuladen, sobald er festgestellt hat, das die bisher heruntergeladene Datei mindestens einen gegenüber dem originalen Datensatz veränderten Datensatz umfaßt.

Der vorstehend genannte Schritt 1.1 des Verfahrens nach der Erfindung kann zweckmäßig in folgenden Teilschritten durchgeführt werden:
- 2.1: Eingeben von mindestens einem die zu schützende Datei identifizierenden Suchbegriff in eine lokale Datenbank eines eigenen Rechners
- 2.2: Ermitteln, Eingeben und Abspeichern von IP-Adressen wenigstens einiger der fremden Rechner in die lokale Datenbank des eigenen Rechners
- 2.3: Aufbau einer Verbindung des eigenen Rechners in das Internet und Starten der Suche durch Abfragen des Suchbegriffes bei den fremden Rechnern.

Der im Schritt 2.1 genannte Suchbegriff kann insbesondere der Titel oder ein Teil des Titels des proprietären Inhaltes der Datei, der Interpret, der Autor oder eine Kombination davon sein. Das im Schritt 2.2 genannte Ermitteln und Eingeben von IP-Adressen insbesondere von Tauschbörsen-Servern kann manuell, inbesondere aber automatisch unter Benutzung einer geeigneten, bekannten Suchmaschine erfolgen, mit dem Ziel, eine oder mehrere Listen der IP-Adressen von an einer oder mehreren Tauschbörsen teilnehmenden fremden Rechnern zu erlangen.

Der eigene Rechner kann dann den zu der zu schützenden Datei gehörenden veränderten Datensatz den durch die abgespeicherten IP-Adressen bezeichneten fremden Rechnern zum Herunterladen anbieten, wenn es sich bei dem betreffenden fremden Rechner um einen Tauschbörsen-Server handelt zur Aufnahme in dessen Verzeichnis oder, wenn es sich bei dem fremden Rechner um einen Teilnehmerrechner handelt, als Antwort auf dessen Suchanfrage nach der zu schützenden Datei, woran sich dann das eigentliche Herunterladen des (veränderten) Datensatzes anschließen kann.

Zweckmäßig wird die Hash-ID jedes als Treffer von einem fremden Rechner angebotenen Datensatzes mit den abgespeicherten Hash-IDs verglichen und Treffer, für die das Vergleichsergebnis positiv ist, werden nicht zu einem veränderten Datensatz weiterverarbeitet, um eine Redundanz zu vermeiden.

Abwehrmaßnahmen der Tauschbörse können dadurch unwirksam gemacht werden, dass die IP-Adresse des eigenen Rechners regelmäßig verändert wird, um zu verhindern, dass die fremden Rechner nach dem erfolglosen Herunterladen eines Datensatzes von dem eigenen Rechner dessen IP-Adresse übergehen.

Anfragen fremder Rechner nach der zu schützenden Datei, alternativ auch lediglich Abrufe des veränderten Datensatzes, können protokolliert werden, und zwar in anonymisierter Form, falls dies aus Datenschutzgründen notwendig ist. Das Protokoll kann nach beliebigen Sortiergesichtspunkten aufbereitet werden, also nicht nur je geschützter Datei, sondern, falls das Verfahren im Auftrag mehrerer Rechteinhaber von einem Dritten durchgeführt wird, auch nach Rechteinhaber, der in der Regel an dem Schutz von mehr als einer Datei mit proprietärem Inhalt gegen unerlaubte Vervielfältigung interessiert ist.

Des weiteren kann das Verfahren so ausgestaltet werden, dass nach dem zu schützenden Inhalt nur bis zu einem vorgegebenen Ablaufdatum gesucht wird, denn in vielen Fällen, z.B. wenn der proprietäre Inhalt ein aktueller Popsong ist, beschränkt sich das Interesse an der unerlaubten Vervielfältigung einer Datei auf einen überschaubaren Zeitraum.

Der Ablauf des Verfahrens nach der Erfindung ist beispielhaft in der Zeichnung dargestellt. Es zeigt:

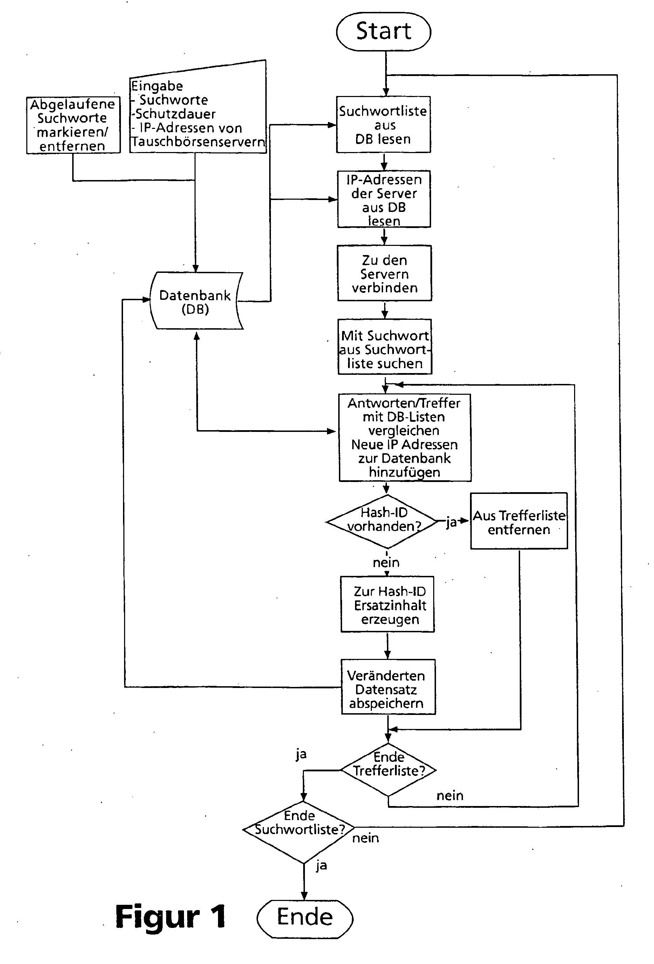

- Fig. 1: ein Ablaufschema der Suche nach von einer Tausch- börse angebotenen Dateien mit proprietären Inhal- ten und der nachfolgenden Erzeugung eines verän- derten Datensatzes je Antwort/Treffer.

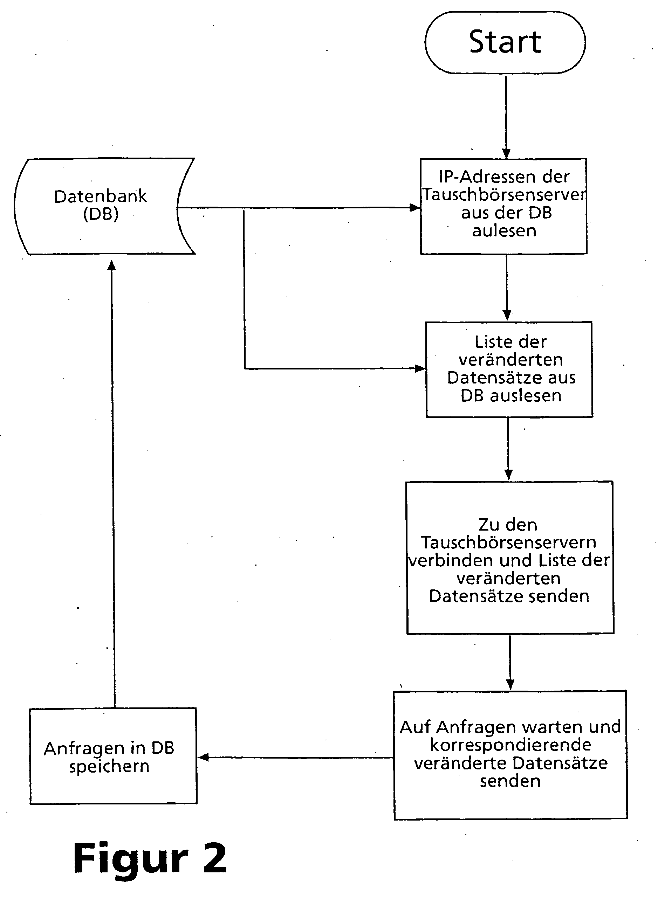

- Fig. 2: ein Ablaufschema des Anbietens des veränderten Datensatzes.

## Patentansprüche

1. Verfahren zum Schützen einer Datei mit proprietärem Inhalt gegen unerlaubte Vervielfältigung durch Filesharing von fremden Rechnern, die zu einer Internet-Tauschbörse zusammengeschlossen sind und welche die Datei in Form von gestreut gespeicherten Datensätzen zur Verfügung stellen, von denen jeder einen Teil des proprietären Inhalts und Metadaten umfasst, die unter anderem aus mindestens einer Hash-ID und z.B dem Titel bestehen, **gekennzeichnet durch** folgende Schritte:
1.1 Suchen nach dem zu schützenden Inhalt im Internet
1.2 Abspeichern mindestens der Hash-ID jedes als Treffer von mindestens einem fremden Rechner angebotenen Datensatzes
1.3 Erzeugen eines gegenüber dem angebotenen Datensatz veränderten Datensatzes, der mindestens die abgespeicherte Hash-ID und mit dieser verknüpfte Ersatzinhaltsdaten umfasst,
1.4 Beantworten von Anfragen fremder Rechner nach der zu schützenden Datei **durch** Anbieten des veränderten Datensatzes.

2. Verfahren nach Anspruch 1, **gekennzeichnet durch** folgende Teilschritte im Schritt 1.1:
2.1 Eingeben von mindestens einem die zu schützende Datei identifizierenden Suchbegriff in eine lokale Datenbank eines eigenen Rechners
2.2 Ermitteln, Eingeben und Abspeichern von IP-Adressen wenigstens einiger der fremden Rechner in die lokale Datenbank des eigenen Rechners
2.3 Aufbau einer Verbindung des eigenen Rechners in das Internet und Starten der Suche **durch** Abfragen des Suchbegriffes bei den fremden Rechnern.

3. Verfahren nach Anspruch 2, **dadurch gekennzeichnet, dass** der eigene Rechner den durch die abgespeicherten IP-Adressen bezeichneten fremden Rechnern den zu der zu schützenden Datei gehörenden, veränderten Datensatz zum Herunterladen anbietet.

4. Verfahren nach einem der Ansprüche 1 bis 3, **dadurch gekennzeichnet, dass** die Hash-ID jedes als Treffer von einem fremden Rechner angebotenen Datensatzes mit den abgespeicherten Hash-IDs verglichen wird und Treffer, für die das Vergleichsergebnis positiv ist, nicht zu einem veränderten Datensatz weiterverarbeitet werden.

5. Verfahren nach einem der Ansprüche 1 bis 4, **dadurch gekennzeichnet, dass** die IP-Adresse des eigenen Rechners regelmäßig verändert wird.

6. Verfahren nach einem der Ansprüche 1 bis 5, **dadurch gekennzeichnet, dass** Anfragen fremder Rechner nach der zu schützenden Datei in anonymisierter Form protokolliert werden.

7. Verfahren nach einem der Ansprüche 1 bis 6, **dadurch gekennzeichnet, dass** nach dem zu schützenden Inhalt nur bis zu einem vorgegebenen Ablaufdatum gesucht wird.

## Claims

1. A method for protecting a file with proprietary content against unauthorized duplication by filesharing by other computers which are joined together to an internet exchange platform and which provide the file in the form of records stored in a scattered manner, of which each comprises a portion of the proprietary content and metadata which consist, among other things, of at least one hash ID and the title for example, **characterized by** the following steps:
1.1 search for the content to be protected in the internet;
1.2 storing at least the hash ID of each file offered as a hit by at least one other computer;
1.3 generating a record which is changed in comparison with the offered record and which comprises at least the stored hash ID and the substitute content data linked to the same;
1.4 responding to queries by other computers for the file to be protected by offering the changed record.

2. A method according to claim 1, **characterized by** the following partial steps in step 1.1:
2.1 entering at least one search word identifying the file to be protected into a local database of the own computer;
2.2 determining, entering and storing IP addresses of at least some of the foreign computers in the local database of the own computer;
2.3 establishing a connection of the own computer to the internet and starting the search by querying the search word in other computers.

3. A method according to claim 2, **characterized in that** the own computer offers the changed data record belonging to the file to be protected for download to the other computers designated by the stored IP addresses.

4. A method according to one of the claims 1 to 3, **characterized in that** the hash ID of each data record offered as a hit by an other computer is compared with the stored hash IDs and hits which are positive for the result of the comparison are not further processed into a changed data record.

5. A method according to one of the claims 1 to 4, **characterized in that** the IP address of the own computer is changed regularly.

6. A method according to one of the claims 1 to 5, **characterized in that** queries of other computers for the file to be protected are logged in an anonymized form.

7. A method according to one of the claims 1 to 6, **characterized in that** the content to be protected is searched only up to a predetermined expiration date.

## Revendications

1. Procédé pour la protection d'un fichier contenant des données propriétaires contre une reproduction non autorisée par partage de fichiers à partir d'ordinateurs externes réunis en une bourse d'échange sur Internet et fournissant le fichier sous la forme d'ensembles de donnés enregistrés de façon dispersée, dont chacun contient une partie du contenu propriétaire et des métadonnées qui se composent entre autres d'au moins un identifiant de hachage et, par exemple, du titre, **caractérisé en ce qu'**il comprend les étapes suivantes:
1.1 recherche du contenu à protéger sur Internet ;
1.2 enregistrement au moins de l'identifiant de hachage de chaque ensemble de données présenté comme résultat de recherche par au moines un ordinateur externe ,
1.3 génération d'un ensemble de données modifié par rapport à l'ensemble de données présenté, qui contient au moins l'identifiant de hachage enregistré et des données de contenu de substitution associées à celui-ci ;
1.4 réponse aux interrogations d'ordinateurs externes recherchant le fichier à protéger par la présentation de l'ensemble de données modifié.

2. Procédé selon la revendication 1, **caractérisé en ce qu'**il comprend les sous-étapes suivantes dans l'étape 1.1 ;
2.1 entrée d'au moins un terme de recherche identifiant le fichier à protéger dans une base de données locale d'un ordinateur interne ;
2.2 détermination, entrée et enregistrement d'adresses IP d'au moins certaines des ordinateurs externes dans la base de données locale de l'ordinateur interne ;
2.3 établissement d'une connexion de l'ordinateur interne à Internet et démarrage de la recherche par consultation du terme de recherche dans les ordinateurs externes.

3. Procédé selon la revendication 2, **caractérisé en ce que** l'ordinateur interne présente pour téléchargement à l'ordinateur externe désigné par les adresses IP mémorisées l'ensemble de données modifié appartenant au fichier à protéger.

4. Procédé selon l'une des revendications 1 à 3, **caractérisé en ce que** l'identifiant de hachage de chaque ensemble de données présenté comme résultat de recherche par un ordinateur externe est comparé aux identifiants de hachage mémorisés et les résultats de recherche donnant un résultat de comparaison positif ne sont pas transformés en ensemble de données modifié.

5. Procédé selon l'une des revendications 1 à 4, **caractérisé en ce que** l'adresse IP de l'ordinateur interne est régulièrement changée.

6. Procédé selon l'une des revendications 1 à 5, **caractérisé en ce que** les demandes du fichier à protéger transmises par des ordinateurs externes sont consignées sous une forme anonymisée.

7. Procédé selon l'une des revendications 1 à 6, **caractérisé en ce que** le contenu à protéger n'est recherché que jusqu'à une date d'expiration prédéterminée.
